# EUROPEAN PATENT SPECIFICATION

(11) **EP 3 865 879 B1**
(45) Date of publication and mention of the grant of the patent: **22.06.2022**
(21) Application number: 20156827.6
(22) Date of filing: 12.02.2020
(51) Int. Cl.: G01P 3/49, G01P 3/50, G01P 3/54, G01D 5/20

(54) **INDUCTIVE SENSOR DEVICE AND METHOD OF DETECTING MOVEMENT OF AN OBJECT**
INDUKTIVE SENSORVORRICHTUNG UND VERFAHREN ZUR DETEKTION DER BEWEGUNG EINES OBJEKTS
DISPOSITIF DE CAPTEUR INDUCTIF ET PROCÉDÉ DE DÉTECTION DE MOUVEMENT D'UN OBJET

(43) Date of publication of application: 18.08.2021
(73) Proprietor: Jaquet Technology Group AG, 4054 Basel (CH)
(72) Inventor: Farrugia, Andre, 68000 Colmar (FR)
(74) Representative: Grünecker Patent- und Rechtsanwälte PartG mbB

(56) References cited:
- EP-A1- 2 713 137
- DE-A1-102005 024 046
- US-A- 4 589 278

## Description

### Field of the Invention

The invention relates to an inductive sensor device for measuring the speed and position (stroke) of an object moving in a reciprocating linear manner, in particular, a piston of an engine, and a method of detecting a reciprocating linear movement of the object.

### Background of the Invention

Accurately detecting the position (stroke) and speed of a linearly moving object, for example, in the context of cylinder-piston systems of combustion engines, is a delicate task in order to control proper operation of a machine, for example, a combustion engine.

In the art, optical sensors, magnetic Hall sensors and inductive sensor are known for detecting linear and/or rotational movements of objects. Inductive sensors operating based on Faraday's law provide advantages with respect to the accuracy of position sensing and robustness against harsh environments. Eddy current sensors represent a class of inductive sensors of particular importance.

In DE 10 2005 024046 A1 an engine having a piston that is adjustably guided in a cylinder hole, where the piston is made of electrically conductive material and is limited by a combustion chamber is described. The cylinder hole is partially interspersed by a magnetic field and is surrounded by an induction coil. The induction coil is arranged in an area of upper and lower slack points of the piston. A direct current coil is arranged at the cylinder hole.

In EP 2 713 137 A1 a target or rotor blade clearance measurement device for indicating an interaction of a measurement probe with a target or rotor blade is described. The measurement device comprises a measurement probe containing a coil, a frequency source arranged to apply an input alternating signal to the measurement probe, and a frequency regulator arranged to regulate the input alternating signal at a frequency below the resonance frequency of the measurement probe. A detector is arranged to detect an output signal from the measurement probe at a frequency of the frequency source which varies in amplitude with an admittance and resonance frequency of the measurement probe.

In US 4 589 278 A an apparatus for determining time of occurrence of the maximum excursion, or top dead center or bottom dead center, of an engine piston or similar structure is described. The piston excursion is continuously measured, and a signal, corresponding to the portion of the cycle having the closest proximity, is selected. The signal is compared to a threshold, and the duration wherein the signal exceeds the threshold is measured by a first digital counter. The measured duration is divided by two, the resulting number counted by a second counter during the subsequent piston cycle, beginning simultaneously with the first counter. The second counter completes the count of one-half of the duration at the midpoint of the measured duration. The apparatus produces an output signal at the midpoint of the measured duration, which corresponds to the maximum excursion, or top dead center or bottom dead center, of the piston motion.

An eddy current sensor comprises a detector coil connected to a capacitance and an alternating current generator (oscillator) in order to form a tuned frequency oscillator (tank) circuit (providing a sinus wave current signal, for example). The current generator causes a high-frequency alternating electrical current flowing in the detector coil that is associated with a high-frequency time-varying magnetic field (primary magnetic field). This primary magnetic field induces eddy currents in an electrically conductive object to be detected that in course induce a secondary magnetic field that, according to Lenz's law, is directed oppositely to the primary magnetic field. This secondary magnetic field affects the impedance and, thus, the resonance frequency f₀ of the oscillator circuit (f₀ = 1 / (2π(LC)^{1/2}), with L and C denoting the inductance and capacitance of the oscillator circuit, respectively). Changes of the impedance/resonance frequency can be detected by a processing unit that may comprise demodulator and amplification units and generates signals based on the changes of the impedance/resonance frequency that can be used to derive information on the position (stroke) and speed of the detected object, in principle.

However, two different sensor devices are conventionally needed for detecting the position (stroke) and speed of a linearly moving object, respectively. Additional markers on the object are needed to obtain reference values for the measurements. Moreover, the real-time torque at a crankshaft of an internal combustion engine cannot be determined with a sufficiently high accuracy in the art. Manufacturing tolerances, in general, also contribute to the difficulties of accurately measuring the movement of an object, for example, the movement of a piston in a cylinder of an internal combustion engine.

Consequently, there is a need for a inductive sensor device that allows for an accurate and easily to be implemented technique for the detection of the reciprocating linear movement of an object.

### Description of the Invention

In order to address the above-mentioned need the invention provides an inductive sensor device for detecting a reciprocating movement of an object (for example, a piston moving in a cylinder of an internal combustion engine) according to claim 1. The inductive sensor device comprises an oscillator circuit comprising a sensing coil configured for inducing electrical eddy currents in the moving object when it is in the detection range of the sensing coil and a processing unit. The processing unit is configured to count oscillations of the oscillator circuit detected in sampling periods, compare the counted oscillations with a predetermined mean value of oscillations and determine both the speed and position of the object based on the comparison of the counted oscillations with the predetermined mean value of oscillations. By position of the object the stroke (range) during reciprocating linear movement of the object is meant herein. The oscillations may be counted by counting raising or falling edges of the detected oscillations.

The oscillator circuit may be excited by an alternate current generator (oscillator). Presence of the object within a detection area of the sensing coil results in a modification of the resonance frequency (impedance of the sensing coil) that can be sensed by a sensing device (detecting the oscillations in the sampling periods) of the inductive sensor device based on voltage or current signals. As a result of the comparison process a first time period can be identified during which the number of the counted oscillations (that represent the actual resonance frequency of the oscillator circuit) exceeds the mean value (HIGH time period) and a second time period can be identified during which the number of the counted oscillations does not exceed the mean value (LOW time period). The sum of these time periods (duration of HIGH time period + duration of LOW time period) represents the time period of the reciprocating movement of the object. The reciprocal of the time period of the reciprocating movement of the object represents the frequency of the movement that directly translates to the speed (for example, in units of rpm by multiplying the frequency of the movement by 60). Moreover, the duty cycle of the movement can be derived from the ratio of the HIGH time period to the time period of the reciprocating movement of the object and translates to the position of the object, for example, the stroke of a piston moving in a cylinder of an internal combustion engine (see also detailed description below).

The thus provided single inductive sensor device allows for the determination of both the speed and position of the object based on the comparison of the counted oscillations with the predetermined mean value of oscillations with a high accuracy (and without mechanically contacting the object to be detected).

The inductive sensor device may further comprise a low-pass filter and the processing unit may be configured to determine the mean value based on signals that are low-pass filtered by the low-pass filter. The employment of the low-pass filter reduces noise and allows for dynamically obtaining a weighted mean value (over past and current counts of oscillations) used for the above-mentioned comparison process.

According to the invention, the processing unit further comprises a HIGH time counter configured to be incremented
either for each sampling period of the sampling periods in that the number of the counted oscillations exceeds the mean value and a LOW time counter configured to be incremented for each sampling period of the sampling periods in that the number of the counted oscillations does not exceed the mean value;
or for each sampling period of the sampling periods in that the number of the counted oscillations is at least equal to the mean value and a LOW time counter configured to be incremented for each sampling period of the sampling periods in that the number of the counted oscillations is below the mean value.

The HIGH time counter can provide the above-mentioned HIGH time period and the LOW time counter can provide the above-mentioned LOW time period.

Furthermore, the processing unit comprises a frequency calculating means and a duty cycle calculating means that are configured to calculate the frequency of the reciprocating movement of the object that directly translates to the speed based on the determined HIGH and LOW time periods and the duty cycle of the movement of the moving object based on the determined HIGH and LOW time periods, respectively.

The processing unit further comprises a position determining means configured to determine the position of the moving object based on the duty cycle calculated by the duty cycle calculating means and a speed determining means configured to determine the speed of the object based on the frequency calculated by the frequency calculating means.

According to an embodiment the inductive sensor device comprises a pulse width modulation signal generator (which can be part of the processing unit) configured to generate pulse width modulated signals based on signals output by the duty cycle calculation means and the speed calculation means and wherein the position determining means is configured to determine the position of the object based on first ones (including information on the duty cycle of the movement of the object) of the pulse width modulated signals and the speed determining means is configured to determine the speed of the object based on second ones (including information on the frequency of the movement of the object) of the pulse width modulated signals.

The above-mentioned need is also addressed by providing a method of sensing a reciprocating movement of an object (for example, a piston moving in a cylinder of an internal combustion engine) by means of an inductive sensor device comprising an oscillator circuit according to claim 4. The method comprises the steps of
inducing electrical eddy currents in the object by means of a sensing coil comprised in the inductive sensor device;
detecting and counting oscillations of the oscillator circuit in sampling periods;
comparing the counted oscillations with a predetermined mean value of oscillations; and
determining both the speed and position of the object based on the comparison of the counted oscillations with the predetermined mean value of oscillations.

The method may comprise determining the predetermined mean value by determining the mean value of low-pass filtered signals representing counts of the oscillations.

According to the invention the method of sensing a reciprocating movement of an object, furthermore, comprises the steps of
determining a HIGH time period by determining a time interval in that the number of counts per sampling period exceeds the mean value or is at least equal to the mean value;
determining a LOW time period by determining a time interval in that the number of counts per sampling period does not exceed the mean value or is below the mean value;
determining a period of the movement of the object by summing up the HIGH time period and the LOW time period; and
determining a duty cycle of the movement of the object based on the ratio of the HIGH time period and the sum of the HIGH time period and LOW time period.

Further, the frequency and speed of the object are determined based on the period of the movement of the object and the position (stroke) of the object is determined based on the duty cycle of the movement of the object.

Each concrete configuration under consideration that comprises a moving object to be detected, for example, a piston moving in a cylinder of a combustion engine, exhibits its own individual duty cycle range from a duty cycle minimum corresponding to a minimum stroke to a duty cycle maximum corresponding to a maximum stroke that are known beforehand. With this predefined knowledge the actually determined duty cycles translate to percentages of the entire/maximum stroke.

The above-described embodiments of the inventive method can be implemented in the above-described embodiments of the inventive inductive sensor device and the above-described embodiments of the inventive inductive sensor device can be configured to perform the steps of the above-described embodiments of the inventive method.

The eddy currents are induced in the object by primary magnetic field generated by the sensing coil when the oscillator circuit is empowered by an electrical generator, for example, an alternating current generator. The eddy currents induce a secondary magnetic field affecting the impedance and resonance frequency of the oscillator circuit and, thus, the number of counts of oscillations.

Furthermore, it is provided a computer program product comprising one or more computer readable media having computer-executable instructions for performing the steps of the method according to one of the above-described embodiments when run on a processing unit of an inductive sensor device according to one of the above-described embodiments.

Further features and exemplary embodiments as well as advantages of the present disclosure will be explained in detail with respect to the drawings. It is understood that the present disclosure should not be construed as being limited by the description of the following embodiments. It should furthermore be understood that some or all of the features described in the following may also be combined in alternative ways.
- Figures 1a and 1b: show a configuration for detecting the movement of a piston according to an embodiment of the present invention.
- Figure 2: illustrates components of the inductive sensor device of the configuration shown in Figures 1a and 1b.
- Figure 3: is a flow chart illustrating the operation of a processing unit of an inductive sensor device according to an embodiment of the present invention.
- Figures 4a and 4b: illustrate the process of conditional incrementing a HIGH timer and a LOW timer according to an embodiment of the present invention.
- Figure 5: shows another embodiment of an inductive sensor device comprising a pulse width modulation signal generator for outputting desired signals.

The present invention provides a sensor device and a method for detecting the movement of a linearly reciprocating object. The stroke and speed of the object can be determined by means of one single inductive sensor device. In the following detailed description the object is represented by a piston moving in a cylinder of an internal combustion engine. It goes without saying that the invention is not restricted to this particular application.

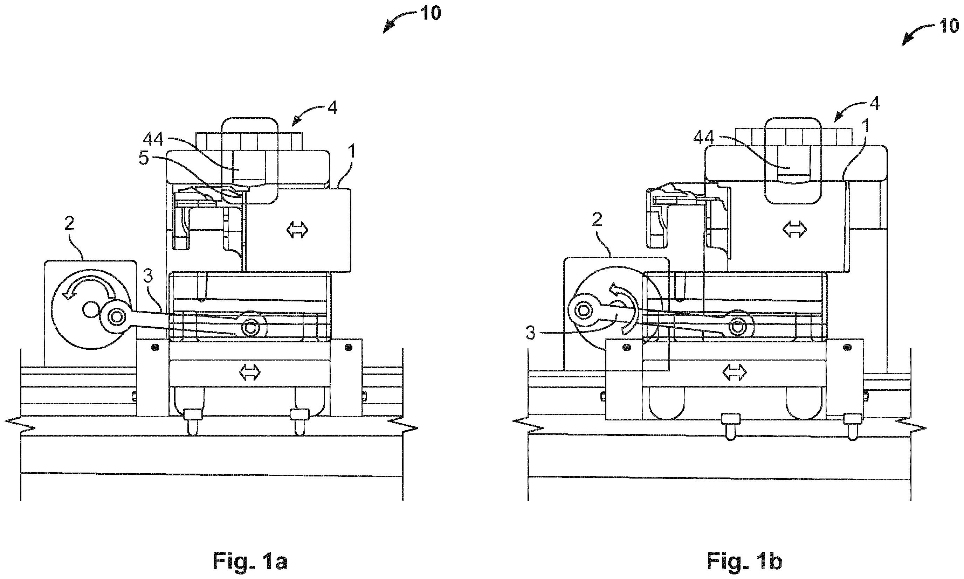

Figures 1a and 1b illustrate a configuration 10 for detecting the movement of a piston 1 according to an embodiment of the present invention. The piston 1 may be made of aluminum, for example, and is moved in a cylinder of an internal combustion engine by a movement generator 2 via a crankshaft 3. The directions of the reciprocating movement of the piston 1 are illustrated by the double arrows. The reciprocating movement of the piston 1 is detected by means of a inductive sensor device 4 comprising a sensor tip element 5. In the situation shown in Figure 1a the sensor tip element 4 partially faces a piston groove 5 of the piston 1 whereas in the situation shown in Figure 1b the sensor tip element 4 completely faces the body of the piston 1 within a detection range.

The inductive sensor device 4 comprises an oscillator circuit generating an alternating current and a sensing coil positioned in or representing partly the sensor tip element 5. The coil may be a double coil and may have a diameter of about 10 mm, for example. The coil may be made of a highly conductive material, for example, copper, and may be formed on an appropriate support substrate, for example, being made of a polymer material. Moreover, the inductive sensor device 4 comprises a processing unit, for example, a µ-controller. The µ-controller may be an 8 bit µ-controller.

The alternating current generates a primary magnetic field that induces electrical eddy currents in the electrically conductive body of the piston 1. The eddy currents induce a secondary magnetic field affecting the impedance and resonance frequency of the oscillator circuit of the inductive sensor device 4. If only a part of the body of the piston 1 or no part of the body faces the sensor tip element 5 a relatively weak secondary magnetic field or no secondary magnetic field is induced. If the body of the piston 1 completely faces the sensor tip element 5 a relatively strong secondary magnetic field is induced and, thus, a relatively strong change in the impedance and resonance frequency of the oscillator circuit can be observed. This information can be directly translated to information on the stroke and speed of the piston 1 as it is described below.

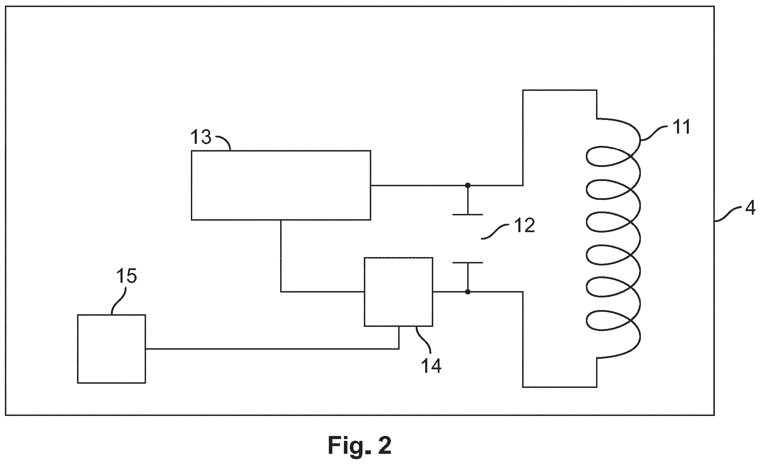

Figure 2 very schematically illustrates components of the inductive sensor device 4 shown in Figures 1a and 1b. The inductive sensor device 4 comprises a sensing coil 11 that is positioned in the tip element portion 44 shown in Figures 1a and 1b. Further, the inductive sensor device 4 comprises some capacitive device 12. The resonance circuitry is powered by some oscillator, for example, an alternate current generator, 13 (in which the capacitive device 12 may be integrated according to another example) generating an alternating electrical current.

A sensing device 14 is provided in order to detect changes in the oscillator circuitry (impedance, resonance frequency) due to the presence of an object to be detected in a detection area of the sensing coil 11, i.e., the 1 piston in the example shown in Figures 1a and 1b. For example, the sensing device 14 can be configured to measure currents or voltages. The sensing device 14 outputs signals to a processing unit 15. The processing unit 15 may be or comprise a µ-controller. The processing unit 15 processes the signals provided by the sensing device 14 in order to determine both the position and speed of the object that is to be detected.

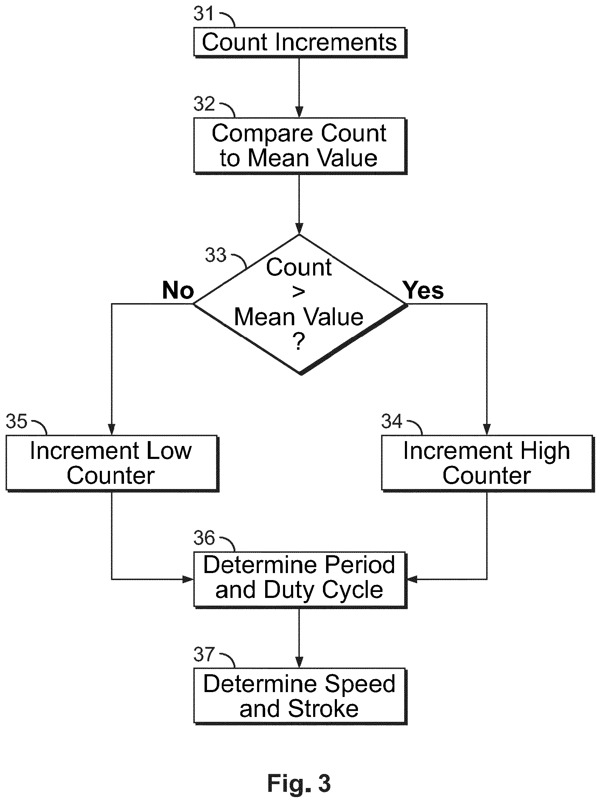

An operation of the processing unit 15 shown in Figure 2 according to an embodiment is illustrated in the flow chart of Figure 3. The oscillator 13 operates at some clock frequency, for example, a clock frequency between 5 to 20 MHz. During a sampling period (timer period) the processing unit 15 counts the number of positive (or, alternatively, negative) edges (one oscillation comprises two edges, namely, a rising/positive and a falling /negative edge) of the signal provided by the sensing device 14, i.e., the resonance frequency of the oscillator circuit as affected (or not, if it is not within the detection range of the sensor coil) by the object to be detected (step 31 of Figure 3). The oscillatory signal provided by the sensing device 14 may be a voltage or current signal. If, for example, a clock frequency of 10 MHz is provided and 2560 increments are counted for a timer period, a frequency of counts (sampling frequency) of 3906.25 results. This frequency of counts, on the other hand, translates to a timer period of 1 / 3906.25 = 256 µs.

The processing unit 15 not only counts the edges of the oscillatory signals but also compares the count for each timer period with a mean value of edges of the oscillatory signals per timer period obtained for a number of previous timer periods (step 32 of Figure 3). The mean value, according to a particular, embodiment can be determined after low-pass filtering of the counts over timer periods used for determining the mean value. By this kind of signal pre-conditioning a weighted average over a pre-defined number of previous timer periods is used for the comparison procedure (step 32 of Figure 3). In particular, signal noise can be removed by the low-pass filtering.

A decision is made whether the count is above the mean value or not (step 33 of Figure 3). If the count exceeds the mean value a HIGH (time) counter is incremented (step 34 of Figure 3), if not a LOW (time) counter is incremented (step 35 of Figure 3). In fact, it can be predefined whether counts that are equal to the mean value contribute to incrementing the HIGH timer of the LOW timer, in principle.

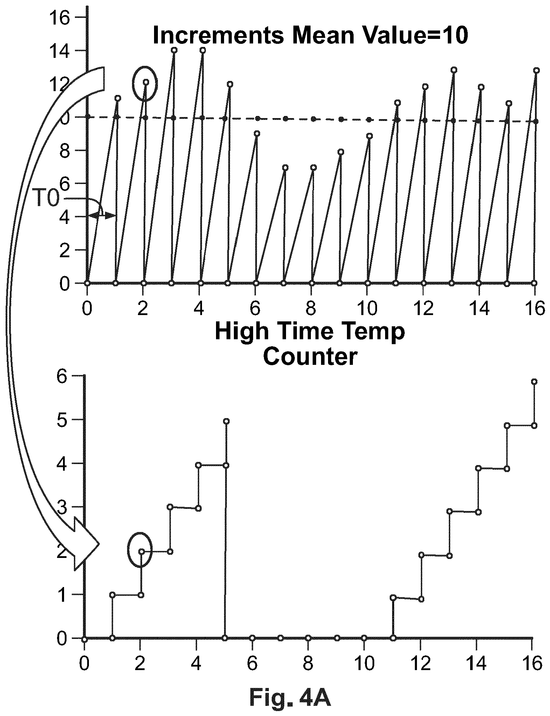

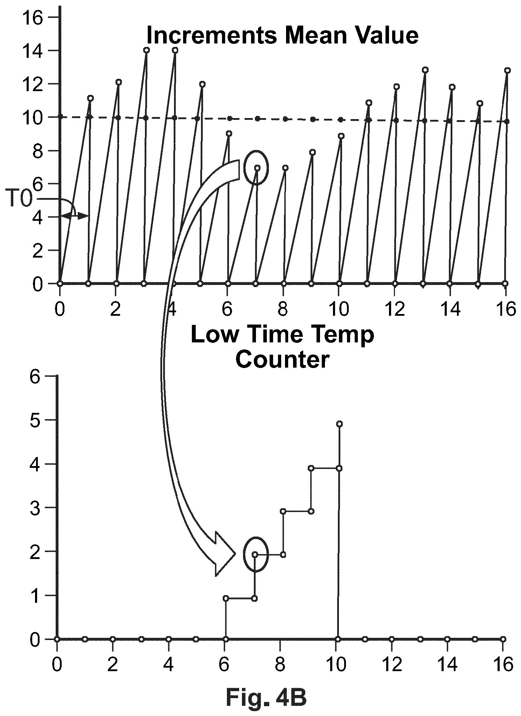

The steps of incrementing a HIGH timer and a LOW timer are illustrated in Figures 4a and 4b. The upper plots of Figures 4a and 4b show the counts of increments (in some arbitrary normalization) (ordinate) during each of sixteen timer periods (abscissa), for example. In real applications, step functions for the value of the total counts of positive edges (increments) of the signal provided by the sensing device 14per timer period might be used. The horizontal line indicates the mean value obtained based on pervious timer periods.

As illustrated in the lower plots of Figures 4a and 4b for each timer period that exhibits a count / number of increments above the mean value, the HIGH timer is incremented (counted up by 1) and for each timer period that exhibits a count of increments below the mean value, the LOW timer is incremented (counted up by 1). Clearly periods (time intervals) extending over some timer periods can be identified during which the HIGH timer is incremented (HIGH periods) and other ones during which the LOW timer is incremented (LOW periods), respectively, can be identified.

Based on the thus obtained HIGH and LOW timer counts the speed and stroke of the piston 1 shown in Figures 1a and 1b can be determined as follows. The (cycle) period of movement (presence and absence, respectively) of the (body of the) piston 1 in the detection area of the inductive sensor device 4 of Figures 1a and 1b can be determined as the sum of the HIGH timer counts and the LOW timer counts and the duty cycle can be determined as the ratio of the HIGH timer counts and the cycle period, optionally multiplied by some normalization factor for quantization in a desired unit, for example, a normalization factor of 100 (step 36 of Figure 3). The period of the reciprocating movement of the piston 1 extends over three frequency changes of the sensed resonance frequency from frequencies below the mean value to frequencies above the mean value and *vice versa.*

Based on the this obtained cycle period and duty cycle the speed and stroke of the piston 1 shown in Figures 1a and 1b can be determined (step 37 of Figure 3). The frequency (in Hz) of the movement of the piston 1 is given by the reciprocal value of the period and the speed is given, for example, in rpm by multiplying this frequency by 60. The duty cycle directly translates to a percentage of the entire stroke of the piston 1 within the cylinder. Each concrete piston-cylinder system exhibits its own individual duty cycle range from a duty cycle minimum corresponding to a minimum stroke to a duty cycle maximum corresponding to a maximum stroke that are known beforehand. With this predefined knowledge the actually determined duty cycles translate to percentages of the entire/maximum stroke.

Consequently, with one single inductive sensor device 4 the speed and stroke of the piston 1 can simultaneously be determined with a high accuracy. From the speed and stroke as well as the known compression of volume caused by the piston the torque of the movement generator 2 shown in Figures 1a and 1b can also be directly determined. No reference markers have to be provided for the object to be detected (i.e., piston 1 in the above-described examples). The inductive sensor device 4 can be produced at low costs and is suitable to operate in harsh environments (with temperatures up to some 150 °C).

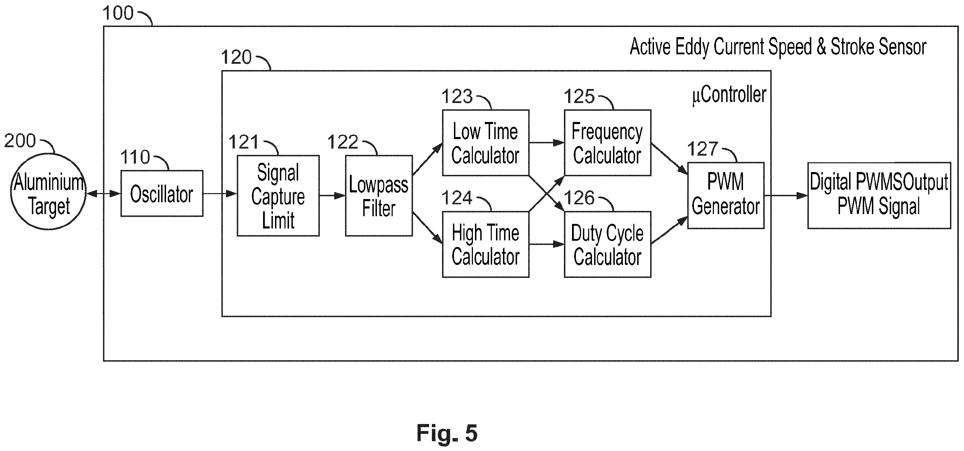

Another example for an inventive inductive sensor device 100 configured to detect movement of an object 200 exhibiting a reciprocating movement is illustrated in Figure 5. This inductive sensor device 100 can be used in all of the above-described embodiments. The inductive sensor device 100 comprises an oscillator circuit 110 comprising a sensing coil for inducing eddy currents in the object 200 and detecting the presence of the object in the sensor detection range based on the induced secondary magnetic field (confer description above). Moreover, the inductive sensor device 100 comprises a processing unit 120, for example, comprising a µ-controller. The processing unit 120 comprises a signal capturing means 121 connected to the oscillator circuit 110 receiving oscillatory signals from the same and providing signals representing counts of edges of the oscillatory signals. The thus provided signals can be low-pass filtered by some low-pass filtering means 122.

Further, the processing unit 120 comprises a HIGH timer 123 and a LOW timer 124 for obtaining HIGH and LOW counts, respectively, as described above. The frequency of the movement of the object 200 can be determined by a frequency calculating means 125 and the duty cycle of the object 200 can be determined by a duty cycle calculating means 126 in a manner as described above. In addition, the processing unit 120 comprises a pulse width modulation signal generator 127 in order to provide pulse width modulated digital output signals carrying the information on the frequency of the movement and the duty cycle of the object 200. The thus obtained pulse width modulated digital output signals can be used in order to derive the speed of the object 200 and the position (stroke) of the object 200 in a manner as it is described above. The pulse width modulated digital output signals PWMS are particularly suitable for an accurate determination of the speed and stroke. The speed of the object can be determined based on the pulse width modulated digital output signals PWMS and the position (stroke) of the moving object can be determined based on the pulse width modulated digital output signals PWMS.

### List of reference numbers:

- 10: configuration
- 1: piston
- 2: movement generator
- 3: crankshaft
- 4, 100: inductive sensor device
- 5: piston groove
- 11: sensing coil
- 12: capacitive device
- 13, 110: oscillator
- 14: sensing device
- 15: processing unit
- 44: sensor tip element
- 121: signal capturing means
- 122: low-pass filter
- 123: LOW timer
- 124: HIGH timer
- 125: frequency calculating means
- 126: duty cycle calculating means
- 127: pulse width modulation signal generator
- 200: object
- PWMS: pulse width modulated signals

## Claims

1. Inductive sensor device (4, 100) for detecting a reciprocating movement of an object, comprising
an oscillator circuit (13, 110) comprising a sensing coil (11) configured for inducing eddy currents in the object;
and a processing unit (15, 120);
wherein the processing unit (15, 120) is configured to
count oscillations of the oscillator circuit (13, 110) detected in sampling periods;
compare the counted oscillations with a predetermined mean value of oscillations; and
determine both the speed and position of the object based on the comparison of the counted oscillations with the predetermined mean value of oscillations;
and **characterized in that**
the processing unit (15, 120) further comprises
i)
a) a HIGH time counter (124) configured to be incremented for each sampling period of the sampling periods **in that** the number of the counted oscillations exceeds the mean value and a LOW time counter (123) configured to be incremented for each sampling period of the sampling periods **in that** the number of the counted oscillations does not exceed the mean value;
or
b) a HIGH time counter (124) configured to be incremented for each sampling period of the sampling periods **in that** the number of the counted oscillations is at least equal to the mean value and a LOW time counter (123) configured to be incremented for each sampling period of the sampling periods **in that** the number of the counted oscillations is below the mean value;
ii) a frequency calculating means (125) configured to calculate the frequency of the reciprocating movement of the object that directly translates to the speed based on the determined HIGH and LOW time periods;
iii) a duty cycle calculation means (126) configured to calculate the duty cycle of the movement of the moving object based on the determined HIGH and LOW time periods;
iv) a position determining means configured to determine the position of the object based on the calculated duty cycle; and
v) a speed determining means configured to determine the speed of the object based on the calculated frequency.

2. The inductive sensor device (4, 100) according to claim 1, further comprising a low-pass filter and wherein the processing unit (15, 120) is configured to determine the mean value based on signals that are low-pass filtered by the low-pass filter (122).

3. The inductive sensor device (4, 100) according to claim 1 or 2, further comprising a pulse width modulation signal generator (127) configured to generate pulse width modulated signals based on signals output by the duty cycle calculation means (126) and the speed calculation means and wherein the position determining means is configured to determine the position of the object based on first ones of the pulse width modulated signals and the speed determining means is configured to determine the speed of the object based on second ones of the pulse width modulated signals.

4. Method of sensing the reciprocating movement of an object by means of an inductive sensor device (4, 100) comprising an oscillator circuit, the method comprising the steps of
inducing electrical eddy currents in the object by means of a sensing coil (11) comprised in the inductive sensor device (4, 100);
detecting and counting oscillations of the oscillator circuit (13, 110) in sampling periods;
comparing the counted oscillations with a predetermined mean value of oscillations; and
determining both the speed and position of the object based on the comparison of the counted oscillations with the predetermined mean value of oscillations;
and **characterized by**
determining a HIGH time period by determining a time interval in that the number of counts per sampling period exceeds the mean value or is at least equal to the mean value;
determining a LOW time period by determining a time interval in that the number of counts per sampling period does not exceed the mean value or is below the mean value;
determining a period of the movement of the object by summing up the HIGH time period and the LOW time period; and
determining a duty cycle of the movement of the object based on the ratio of the HIGH time period and the sum of the HIGH time period and LOW time period, wherein the speed of the object is determined based on the reciprocal of the determined period of the movement of the object and the position of the object is determined based on the determined duty cycle of the movement of the object.

5. The method according to claim 4, further comprising low-pass filtering counts of oscillations and determining the mean value of the low-pass filtered counts of oscillations as the predetermined mean value.

6. The method according to claim 4 or 5, further comprising
pulse width modulating signals, PWMS, including information on the period of the movement of the object and PWMS including information on the duty cycle of the movement of the object; and wherein
the speed and the position of the object are determined based on the PWMS.

7. The method according to one of the claims 4 to 6, wherein the reciprocating movement of the object is a movement of a piston (1) in a cylinder of a combustion engine and the position is the stroke of the piston (1).

8. The method according to one of the claims 4 to 7, wherein the stroke of the piston (1) is determined in percentages of an entire or maximum stroke known from a predetermined duty cycle minimum corresponding to a minimum stroke and a predetermined duty cycle maximum corresponding to a maximum stroke.

9. Computer program product comprising one or more computer readable media having computer-executable instructions for performing the steps of the method according to one of the claims 4 to 8 when run on a processing unit of an inductive sensor device (4, 100) according to one of the claims 1 to 3.

## Patentansprüche

1. Eine induktive Sensorvorrichtung (4, 100) zum Detektieren einer Pendelbewegung eines Objekts, umfassend
eine Oszillatorschaltung (13, 110) mit einer Detektionsspule (11), die dazu ausgebildet ist, Wirbelströme in dem Objekt zu induzieren;
und eine Verarbeitungseinheit (15, 120);
wobei die Verarbeitungseinheit (15, 120) dazu ausgebildet ist,
Oszillationen der Oszillatorschaltung (13, 110) zu zählen, die in Messperioden detektiert werden;
die gezählten Oszillationen mit einem vorbestimmten mittleren Wert von Oszillationen zu vergleichen; und
sowohl die Geschwindigkeit als auch die Position des Objekts auf der Grundlage des Vergleichs der gezählten Oszillationen mit dem vorbestimmten mittleren Wert von Oszillationen zu bestimmen;
und **dadurch gekennzeichnet, dass**
die Verarbeitungseinheit (15, 120) weiterhin umfasst
i)
a) einen HOCH-Zeit-Zähler (124), der dazu ausgebildet ist, für jede Messperiode der Messperioden, in der die Zahl der gezählten Oszillationen den mittleren Wert überschreitet, erhöht zu werden, und einen NIEDRIG-Zeit-Zähler (123), der dazu ausgebildet ist, für jede Messperiode der Messperioden, in der die Zahl der gezählten Oszillationen den mittleren Wert nicht überschreitet, erhöht zu werden;
oder
b) einen HOCH-Zeit-Zähler (124), der dazu ausgebildet ist, für jede Messperiode der Messperioden, in der die Zahl der gezählten Oszillationen zumindest gleich dem mittleren Wert ist, erhöht zu werden, und einen NIEDRIG-Zeit-Zähler (123), der dazu ausgebildet ist, für jede Messperiode der Messperioden, in der die Zahl der gezählten Oszillationen unterhalb des mittleren Werts liegt, erhöht zu werden;
ii) ein Frequenzberechnungsmittel (125), das dazu ausgebildet ist, die Frequenz der Pendelbewegung des Objekts, die sich direkt in die Geschwindigkeit übersetzen lässt, auf der Grundlage der bestimmen HOCH- und NIEDRIG-Zeitperioden zu berechnen;
iii) ein Arbeitszyklusberechnungsmittel (126), das dazu ausgebildet ist, den Arbeitszyklus der Bewegung des sich bewegenden Objekts auf der Grundlage der bestimmten HOCH- und NIEDRIG-Zeitperioden zu berechnen;
iv) ein Positionsbestimmungsmittel, das dazu ausgebildet ist, die Position des Objekts auf der Grundlage des berechneten Arbeitszyklus zu bestimmen; und
v) ein Geschwindigkeitsbestimmungsmittel, das dazu ausgebildet ist, die Geschwindigkeit des Objekts auf der Grundlage der berechneten Frequenz zu bestimmen.

2. Die induktive Sensorvorrichtung (4, 100) gemäß Anspruch 1, die weiterhin einen Niedrigpass-Filter umfasst, und in der Verarbeitungseinheit (15, 120) dazu ausgebildet ist, den mittleren Wert auf der Grundlage von Signalen zu bestimmen, die von dem Niedrigpass-Filter (122) niedrigpassgefiltert werden.

3. Die induktive Sensorvorrichtung (4, 100) gemäß Anspruch 1 oder 2, die weiterhin einen Pulsbreitenmodulationssignalgenerator (127) umfasst, der dazu ausgebildet ist, pulsbreitenmodulierte Signale auf der Grundlage von Signalen zu erzeugen, die von dem Arbeitszyklusberechnungsmittel (126) und dem Geschwindigkeitsbestimmungsmittel ausgegeben werden, und in der das Positionsbestimmungsmittel dazu ausgebildet ist, die Position des Objekts auf der Grundlage von ersten der pulsbreitenmodulierte Signale zu bestimmen und das Geschwindigkeitsbestimmungsmittel dazu ausgebildet ist, die Geschwindigkeit des Objekts auf der Grundlage von zweiten der pulsbreitenmodulierte Signale zu bestimmen.

4. Verfahren zum Detektieren einer Pendelbewegung eines Objekts mithilfe einer induktiven Sensorvorrichtung (4, 100) mit einer Oszillatorschaltung, wobei das Verfahren die Schritte umfasst
Induzieren von Wirbelströmen in dem Objekt mithilfe einer Detektionsspule (11), die von der induktiven Sensorvorrichtung (4, 100) umfasst ist;
Detektieren und Zählen von Oszillationen der Oszillatorschaltung (13, 110) in Messperioden;
Vergleichen der gezählten Oszillationen mit einem vorbestimmten mittleren Wert von Oszillationen; und
Bestimmen sowohl der Geschwindigkeit als auch der Position des Objekts auf der Grundlage des Vergleichs der gezählten Oszillationen mit dem vorbestimmten mittleren Wert von Oszillationen;
und **gekennzeichnet durch**
Bestimmen einer HOCH-Zeitperiode durch Bestimmen eines Zeitintervalls, in dem die Zahl der Zählungen pro Messperiode den mittleren Wert überschreitet oder dem mittleren Wert zumindest gleich ist,
Bestimmen einer NIEDRIG-Zeitperiode durch Bestimmen eines Zeitintervalls, in dem die Zahl der Zählungen pro Messperiode den mittleren Wert nicht überschreitet oder kleiner als der mittlere Wert ist:
Bestimmen einer Periode der Bewegung des Objekts durch Summieren der HOCH-Zeitperiode und der NIEDRIG-Zeitperiode; und
Bestimmen eines Arbeitszyklus der Bewegung des Objekts auf der Grundlage des Verhältnisses von der HOCH-Zeitperiode zu der Summe der HOCH-Zeitperiode und der NIEDRIG-Zeitperiode, wobei die Geschwindigkeit des Objekts auf der Grundlage des Kehrwerts der bestimmten Periode der Bewegung des Objekts bestimmt wird,
und die Position des Objekts auf der Grundlage des bestimmten Arbeitszyklus der Bewegung des Objekts bestimmt wird.

5. Das Verfahren gemäß Anspruch 4, das weiterhin ein Niedrigpassfiltern von Zählungen von Oszillationen und Bestimmen des mittleren Werts der niedrigpassgefilterten Zählungen von Oszillationen als den vorbestimmten mittleren Wert umfasst.

6. Das Verfahren gemäß Anspruch 4 oder 5, das weiterhin umfasst
Pulsbreitenmodulieren von Signalen, PWMS, die Informationen über die Periode der Bewegung des Objekts enthalten, und PWMS, die Informationen über den Arbeitszyklus der Bewegung des Objekts enthalten; und wobei die Geschwindigkeit und die Position des Objekts auf der Grundlage des PWMS bestimmt werden.

7. Das Verfahren gemäß einem der Ansprüche 4 bis 6, in dem die Pendelbewegung des Objekts eine Bewegung eines Kolbens (1) in einem Zylinder eines Verbrennungsmotors ist, und die Position der Hub des Kolbens ist.

8. Das Verfahren gemäß einem der Ansprüche 4 bis 7, in dem der Hub des Kolbens (1) als Prozentsatz eines gesamten oder maximalen Hubs bestimmt wird, der aus einem vorbestimmten Arbeitszyklusminimum entsprechend einem minimalen Hub und einem vorbestimmten Arbeitszyklusmaximum entsprechend einem maximalen Hub bekannt ist.

9. Computerprogrammprodukt, mit einem oder mehreren computerlesbaren Medien, die computerausführbare Anweisungen zum Ausführen der Schritte des Verfahrens gemäß einem der Ansprüche 4 bis 8, wenn sie auf einer Verarbeitungseinheit einer induktiven Sensorvorrichtung (4, 100) gemäß einem der Ansprüche 1 bis 3 laufengelassen werden, enthalten.

## Revendications

1. Dispositif de capteur inductif (4, 100) destiné à détecter un mouvement alternatif d'un objet, comprenant
un circuit oscillateur (13, 110) comprenant une bobine de détection (11) configurée pour induire des courants de Foucault dans l'objet ; et
une unité de traitement (15, 120) ;
dans lequel l'unité de traitement (15, 120) est configurée pour
compter les oscillations du circuit oscillateur (13, 110) détectées pendant des périodes d'échantillonnage ;
comparer les oscillations comptées à une valeur moyenne prédéterminée des oscillations ; et
déterminer la vitesse ainsi que la position de l'objet sur la base de la comparaison des oscillations comptées à la valeur moyenne prédéterminée des oscillations ;
et **caractérisé en ce que** l'unité de traitement (15, 120) comprend en outre
i)
a) un compteur de temps HAUT (124) configuré pour être incrémenté à chaque période d'échantillonnage desdites périodes d'échantillonnage dans laquelle le nombre d'oscillations comptées dépasse la valeur moyenne, et un compteur de temps BAS (123) configuré pour être incrémenté à chaque période d'échantillonnage desdites périodes d'échantillonnage dans laquelle le nombre des oscillations comptées ne dépasse pas la valeur moyenne ;
ou
b) un compteur de temps HAUT (124) configuré pour être incrémenté à chaque période d'échantillonnage desdites périodes d'échantillonnage dans laquelle le nombre d'oscillations comptées est au moins égal à la valeur moyenne, et un compteur de temps BAS (123) configuré pour être incrémenté à chaque période d'échantillonnage desdites périodes d'échantillonnage dans laquelle le nombre des oscillations comptées est inférieur à la valeur moyenne ;
ii) un moyen de calcul de fréquence (125) configuré pour calculer la fréquence du mouvement alternatif de l'objet qui traduit directement la vitesse sur la base des périodes de temps HAUT et BAS déterminées ;
iii) un moyen de calcul de rapport cyclique (126) configuré pour calculer le rapport cyclique du mouvement de l'objet mobile sur la base des périodes de temps HAUT et BAS déterminées ;
iv) un moyen de détermination de position configuré pour déterminer la position de l'objet sur la base du rapport cyclique calculé ; et
v) un moyen de détermination de vitesse configuré pour déterminer la vitesse de l'objet sur la base de la fréquence calculée.

2. Dispositif de capteur inductif (4, 100) selon la revendication 1, comprenant en outre un filtre passe-bas et dans lequel l'unité de traitement (15, 120) est configurée pour déterminer la valeur moyenne sur la base de signaux qui sont filtrés en passe-bas par le filtre passe-bas (122) .

3. Dispositif de capteur inductif (4, 100) selon la revendication 1 ou 2, comprenant en outre un générateur de signaux de modulation en largeur d'impulsion (127) configuré pour générer des signaux modulés en largeur d'impulsion sur la base de signaux envoyés par le moyen de calcul de rapport cyclique (126) et le moyen de calcul de vitesse, et dans lequel le moyen de détermination de position est configuré pour déterminer la position de l'objet sur la base de premiers signaux desdits signaux modulés en largeur d'impulsion et le moyen de détermination de vitesse est configuré pour déterminer la vitesse de l'objet sur la base de deuxièmes signaux desdits signaux modulés en largeur d'impulsion.

4. Procédé de détection du mouvement alternatif d'un objet au moyen d'un dispositif de capteur inductif (4, 100) comprenant un circuit oscillateur, le procédé comprenant les étapes suivantes :
induction de courants électriques de Foucault dans l'objet au moyen d'une bobine de détection (11) comprise dans le dispositif de capteur inductif (4, 100) ;
détection et comptage d'oscillations du circuit oscillateur (13, 110) durant des périodes d'échantillonnage ;
comparaison des oscillations comptées à une valeur moyenne prédéterminée des oscillations ; et
détermination de la vitesse ainsi que de la position de l'objet sur la base de la comparaison des oscillations comptées à la valeur moyenne prédéterminée des oscillations ;
et **caractérisé par**
la détermination d'une période de temps HAUT en déterminant un intervalle temporel dans lequel le nombre de comptages par période d'échantillonnage dépasse la valeur moyenne ou est au moins égal à la valeur moyenne ;
la détermination d'une période de temps BAS en déterminant un intervalle temporel dans lequel le nombre de comptages par période d'échantillonnage ne dépasse pas la valeur moyenne ou est inférieur à la valeur moyenne ;
la détermination d'une période de mouvement de l'objet en additionnant la période de temps HAUT et la période de temps BAS ; et
la détermination d'un rapport cyclique du mouvement de l'objet sur la base du ratio entre la période de temps HAUT et la somme de la période de temps HAUT et de la période de temps BAS, dans lequel la vitesse de l'objet est déterminée sur la base de la valeur réciproque de la période déterminée du mouvement de l'objet et la position de l'objet est déterminée sur la base du rapport cyclique déterminé du mouvement de l'objet.

5. Procédé selon la revendication 4, comprenant en outre le filtrage passe-bas des comptages d'oscillations et la détermination de la valeur moyenne des comptages d'oscillations filtrés passe-bas comme étant la valeur moyenne prédéterminée.

6. Procédé selon la revendication 4 ou 5, comprenant en outre
des signaux de modulation en largeur d'impulsion PWMS, soit Puise Width Modulating Signal, comprenant de l'information sur la période du mouvement de l'objet, et des PWMS comprenant de l'information sur le rapport cyclique du mouvement de l'objet ; et dans lequel
la vitesse et la position de l'objet sont déterminés sur la base du PWMS.

7. Procédé selon l'une des revendications 4 à 6, dans lequel le mouvement alternatif de l'objet est un mouvement d'un piston (1) dans un cylindre d'un moteur à combustion et la position est la course du piston (1).

8. Procédé selon l'une des revendications 4 à 7, dans lequel la course du piston (1) est déterminée en pourcentage d'une course entière ou maximale connue à partir d'un rapport cyclique minimal prédéterminé correspondant à une course minimale et d'un rapport cyclique maximal prédéterminé correspondant à une course maximale.

9. Produit logiciel comprenant un ou plusieurs supports lisibles par un ordinateur comportant des instructions exécutables par un ordinateur pour mettre en œuvre les étapes du procédé selon l'une des revendications 4 à 8 lorsqu'elles sont exécutées par une unité de traitement d'un dispositif de capteur inductif (4, 100) selon l'une des revendications 1 à 3.
